# EUROPEAN PATENT APPLICATION

(11) **EP 1 773 058 A1**
(43) Date of publication of application: **11.04.2007**
(21) Application number: 06076537.7
(22) Date of filing: 07.08.2006
(51) Int. Cl.: H04N 7/20

(54) **Dual channel video and audio data for DBS receivers**

(30) Priority: 24.08.2005 US 210488
(71) Applicant: Delphi Technologies, Inc., Troy, Michigan 48007 (US)
(72) Inventor: Hules, Frank J., Calabasas, CA 91302 (US)
(74) Representative: Denton, Michael John

(57) **Abstract**

A DBS system requires a clear view of the southern sky to operate without interruption. During line-of-sight satellite blockages, the audio content of DBS programs is lost. The present invention provides a technique in which a continuous media track (e.g., audio and/or video) is presented to the system user even though the satellite signal may be temporarily blocked. A first media track is received and stored in a buffer area. After a time delay, a second media track is received which is a copy of the first media track. When an interruption occurs in the second media track during playback, a receiver/decoder box is able to seamlessly stitch (or splice) in the first (buffered) media track to provide a continuous media track to the system user.

## Description

### TECHNICAL FIELD

The present invention generally relates to the transmission of digital data, and more particularly, to the transmission of digital data in a Direct Broadcast Satellite (DBS) system.

### BACKGROUND OF THE INVENTION

In a period of just over 50 years, the satellite industry has evolved into a major home entertainment provider and a pivotal information delivery technology. The inception and growth of the satellite industry has been made possible by a variety of factors including major technological developments, advances in digital technology and successive improvements in hardware. Satellites are now used for voice, data, and television communications worldwide. Communications satellites were originally designed for commercial purposes for sending telephone, radio, television, and other signals across the country and around the world for re-transmission to businesses and homes by local telephone companies, television stations, or cable companies.

Direct Broadcast Satellite (DBS) or "direct to home" systems are a relatively recent development in the world of television distribution. "Direct broadcast satellite" can either refer to the communications satellites themselves that deliver DBS service or the actual television service. DBS systems are also commonly referred to as "minidish" systems. DBS systems rely upon proprietary reception equipment, most often in the form of a television set-top signal decoder box. This measure assures satellite television providers that only authorized, paying subscribers have access to the content.

The first commercial DBS service, Sky Television, was launched in 1989 and served customers in the United Kingdom. Hughes's DirecTV (now part of DIRECTV Group, Inc.), the first high-powered DBS system, went online in 1994 and was the first North American DBS service. DirecTV is the nation's leading and fastest growing digital television service provider with more than 13.5 million customers. DirecTV's main competitor, DISH Network, moved toward providing its own DBS service on December 28, 1995, with the successful launch of EchoStar I from China. That same year, EchoStar established the DISH Network brand name. In January 2005, DISH Network passed the 11 million customer milestone.

From the time DirecTV went online to the present, the satellite television industry has grown to over 24 million subscribers, making it one of the hottest and fastest growing consumer electronics products of all time. Small-dish DBS systems have become a reality, creating a huge new market for satellite broadcast services. Favorable legislation has removed many of the former obstacles of dish ownership, and the industry has seen the delivery of interactive TV services, two-way high-speed Internet access via satellite, and the emergence of satellite radio.

In the United States, a DBS dish requires a clear view of the southern sky. During line-of-sight satellite blockages, the video and audio content of DBS programs is lost, resulting in customer dissatisfaction. Signal blockage is loss due to an object in the path of the signal from the satellite to the dish. If an object that is large and dense is positioned in the path of the signal from the satellite, it will prevent sufficient signal from arriving at the dish. The signal cannot bend around, or penetrate through, these objects. The reception will be degraded or completely interrupted until the object is no longer in the path of the signal to the dish. In a mobile environment, signal blockages may occur when a vehicle goes under a bridge or behind a building or tree.

In a residential environment, atmospheric conditions such as rain, snow and heavy fog may cause sufficient loss of signal level. The most common of these is referred to as "rain fade." Raindrops in the atmosphere reduce the signal from the satellite. The heavier the rain, the greater the signal loss will be. When the amount of loss is high enough, the antenna will not be able to stay locked onto the satellite signal. Once the amount of rain has decreased sufficiently, the antenna will re-acquire the satellite signal.

Prior to the advent of video programming in one's automobile, radio began as the primary mode of entertainment for the driver and any passengers. Still today, people embrace the radio as a source of entertainment and information while driving. For this reason, people may be willing to accept less than perfect video for a good sound track. For many years people have purchased and listened to portable AM/FM radios with television channels. Additionally, drivers have become accustomed to listening to their kids' VCR and DVD sound tracks even though can't enjoy the video presentation.

### SUMMARY OF THE INVENTION

The present invention provides a capability in a receiver/decoder box to seamlessly stitch in a media track in the event a media stream becomes corrupted. A continuous media track is then presented to the customer even though the satellite signal may be temporarily blocked.

The present invention also provides a unique method for providing continuous video to the customer. A first series of video frames is received and stored in a buffer area. A second series of video frames, which are a copy of the first series, is also received and played out to the customer. A receiver/decoder box has the capability to seamlessly stitch in the first (buffered) series of video frames in the event the second (unbuffered) series of video frames becomes corrupted.

### BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:
Figures 1a and 1b are flow chart diagrams of techniques for transmitting the dual audio and video channels.
Figure 2 is a schematic representation of an apparatus for transmitting the dual audio channels.
Figure 3 is a flow chart diagram of a technique for receiving two audio tracks and seamlessly stitching in the first audio track in the event the second audio track becomes corrupted.
Figure 4 is a schematic representation of an apparatus for receiving two audio tracks and seamlessly stitching in the first(early) audio track in the event the second (normal) audio track becomes corrupted.
Figures 5a and 5b are flow chart diagrams of techniques for transmitting the dual video channels.
Figure 6 is a schematic representation of an apparatus for transmitting the dual video channels.
Figure 7 is a flow chart diagram of a technique for receiving two video tracks and seamlessly stitching in the first video track in the event the second video track becomes corrupted.
Figure 8 is a schematic representation of an apparatus for receiving two audio tracks and seamlessly stitching in the first video track in the event the second video track becomes corrupted.
Figure 9 is a flow chart diagram of a technique for displaying an unpixelated video frame in the event the video being presented becomes corrupted.
Figure 10 is a schematic representation of an apparatus for displaying an unpixelated video frame in the event the video being presented becomes corrupted.

Corresponding reference characters indicate corresponding parts throughout the several views. Although the drawings represent embodiments of the present invention, the drawings are not necessarily to scale and certain features may be exaggerated in order to better illustrate and explain the present invention. The exemplification set out herein illustrates an embodiment of the invention, in one form, and such exemplifications are not to be construed as limiting the scope of the invention in any manner.

### DESCRIPTION OF THE PREFERRED EMBODIMENTS

The embodiments disclosed below are not intended to be exhaustive or limit the invention to the precise forms disclosed in the following detailed description. Rather, the embodiments are chosen and described so that others skilled in the art may utilize their teachings.

For the purposes of the present invention, certain terms shall be interpreted accordance with the following definitions.

"Frame" generally refers, in the context of streaming media, to a single picture or time period of audio media, or to a group of serial data bits. While frames may be thought of as single photos, graphics, notes, or noises, each frame may be represented in many different formats. For example, it the most complete and independent format a frame may be a complete pixelated image, whereas a frame in a media stream may be more efficiently represented as noting only the pixels which have changed from the prior frame.

"Direct Broadcast Satellite" or "DBS" hereinafter refers to a technology to deliver a television or audio signal digitally, directly from a satellite to a consumer's dish or receiver.

"Media" or "media data" generally refers to data that encodes audio, video, graphic, or other presentation information/context.

"Pixelation" hereinafter refers to a condition in which several of the elements (pixels) on a display become corrupted, rendering them more visible by virtue of contrast to their background

"Second Audio Program" or "SAP" hereinafter refers to second of two separate audio channels that most television sets are able to receive. The SAP channel may be used for various purposes, such as an alternative soundtrack in a different language.

"Stitch" or "Stitching" generally refers to using digital techniques to connect and blend multiple photographs into one. In regards to audio and video streaming material, stitching refers to inserting audio and/or video frames in an order that maintains the continuity of the stream. Stitching may be thought of as digital splicing, where digital frames are used to replace damaged or missing frames of an audio and/or video stream.

"Streaming" generally refers to techniques for transferring media data which is replayed in real time. Streaming allows a user to see and/or hear the information as it arrives without having to wait for the entire file to be transferred. Streaming technology thus allows media data to be delivered to a client as a continuous flow with minimal delay before playback can begin. In the context of the Internet, multimedia data is transmitted in larger blocks called data packets. The data packets are briefly buffered as they arrive before being played, and are then discarded. In the context of the present invention, however, the multimedia data is sent as a real-time broadcast signal, rather than in packets, and is not buffered. Thus when a blockage cuts off reception of "streaming data", as used in this application, the data is lost.

"Track" generally refers to, in the context of streaming media, a predefined segment or portion of media data. Analogous to the physical tracks of storage media wherein predefined areas of magnetic material are organized in tracks, media data transmitted over telecommunications lines are organized logically into predefined subsets that are referred to as tracks.

Mobile DBS tracking and reception systems operate in environments that often obstruct a direct view of the satellite being communicated with. While watching satellite television broadcasts, the system user commonly experiences video pixilation, freeze frames, or no video at all. The video interruptions also may be associated with an audio sound track that is interleaved with popping sounds or no sounds at all. These observables undermine the entertainment experience sought by the system user.

Any vehicle being driven in the city, wooded areas, or in the mountains may experience signal blockages. They are unavoidable but also temporal. The picture and audio typically return relatively quickly. Given this baseline, there is an opportunity to enhance the digital transmission system design to enrich the system user's experience within the limitations of the driving environment.

The present invention provides a method for providing a continuous media track to the customer in the event the satellite signal has been temporarily blocked. The satellite transmits two copies of the same audio/video media, one in current time and one as a time delayed copy. Upon reception the time delayed copy is processed and viewed as if it were the currently broadcasted media and the other copy, representing the "earlier-in-time" version is stored into memory and digitally delayed to make it an alternate copy of what is currently being processed and viewed. In the event of a short-term blockage of the satellite signals, the alternate copy can provide the missing audio/video content, thereby enabling the system to provide uninterrupted audio/video to the viewer. In the design implementation, both media tracks are received as digital bit streams. A receiver/decoder box receiving the digital bit streams has the capability to seamlessly stitch in the buffered media track in the event the currently viewed media track becomes corrupted, providing a continuous media track to the system user/viewer.

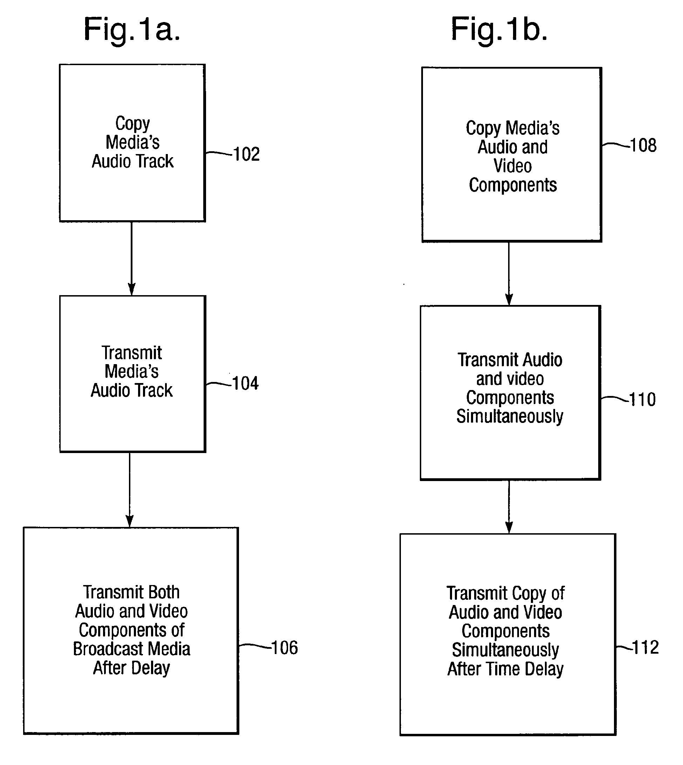

The dual transmissions of the satellite media can be implemented in any of the following embodiments. In one embodiment depicted in Figure 1a, a copy is made of the media's audio track (step 102) and transmission begins (step 104). Then after a time delay, e.g. several seconds, a second transmission begins which includes both the audio and video tracks of the broadcast media (step 106). This may be considered an equivalent to transmitting the audio track simultaneously with a time-delayed copy of the audio and video tracks. In another embodiment depicted in Figure 1b, a copy of the audio and video tracks is made (step 108) and then the audio and video tracks are transmitted simultaneously (step 110) followed by time-delayed copies of the same audio and video tracks (step 112). The benefit of the first embodiment is that it requires less satellite bandwidth and is easier to implement. The benefit of the second embodiment is that it provides the system viewer with a more complete blockage solution.

To simplify discussions relating to the present invention, the first embodiment will be used to exemplify the relevant concepts. These concepts apply to both embodiments for which the present invention is claimed.

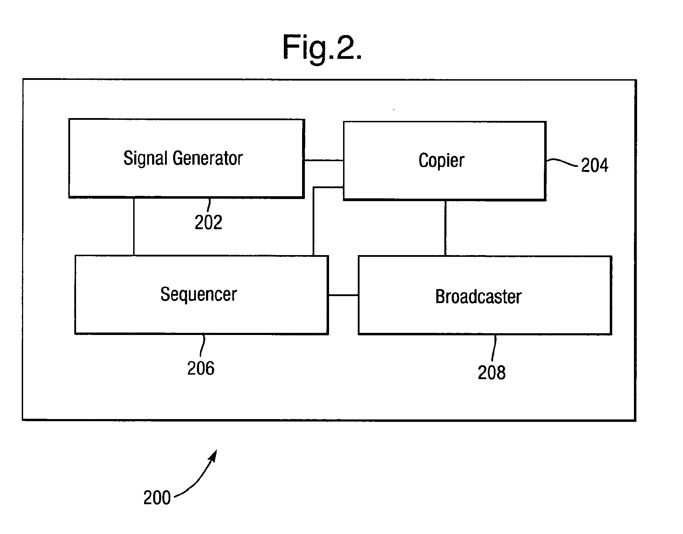

One exemplary form of the present invention is shown in Figure 2. In the depicted embodiment, transmitter 200 has copier circuitry 204 that is coupled to signal generator 202. Sequencer 206 coordinates the transmission of the desired signal by broadcast circuitry 208. In one embodiment copier 204 creates a copy of the audio track and sequencer 206 provides a signal to broadcast circuitry 208 to transmit the audio track. Several seconds later, sequencer 206 provides a signal from signal generator 202 to have broadcast circuitry 208 retransmit the audio track with the video track. In another embodiment, copier 204 creates a copy of the audio and video tracks and sequencer 206 provides a signal to broadcast circuitry 208 to transmit the both tracks. Several seconds later, sequencer 206 provides a signal from signal generator 202 to have broadcast circuitry 208 retransmit the audio track with the video track.

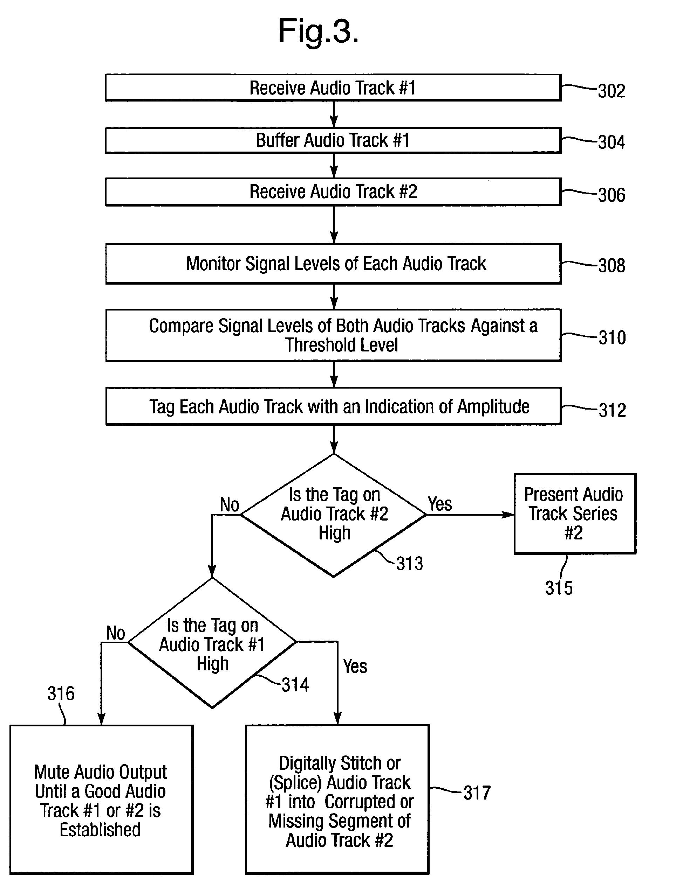

In another embodiment of the present invention, a technique for receiving two digital audio tracks and stitching in a good track in the event the currently listened to track becomes corrupted is depicted in Figure 3. The non-time delayed track (call this track #1) is received (step 302) and stored in a buffer (step 304). The time-delayed track (call this track #2) is also received (step 306) and passed forward for presentation to the system user. The signal levels of the two tracks are continuously monitored (step 308) and compared to a threshold level (step 310). Then the two audio tracks are tagged with a high or low bit state indicative of their respective signal amplitude relative to the threshold level (step 312). If the second track's tag is low (step 313), then the first track's tag is checked (step 314). If it is high then the first (buffered) track is digitally stitched into the audio track being presented to the system user (step 317). If it is low, then the output video presentation is muted until a good audio track, either #1 or #2, is re-established (step 316). However, in step 313, if the tag of series #2 is high, then the second audio track continues to be presented to the system user (step 315). This process may be repeated and applied for predetermined numbers of frames, or a predetermined amount of time.

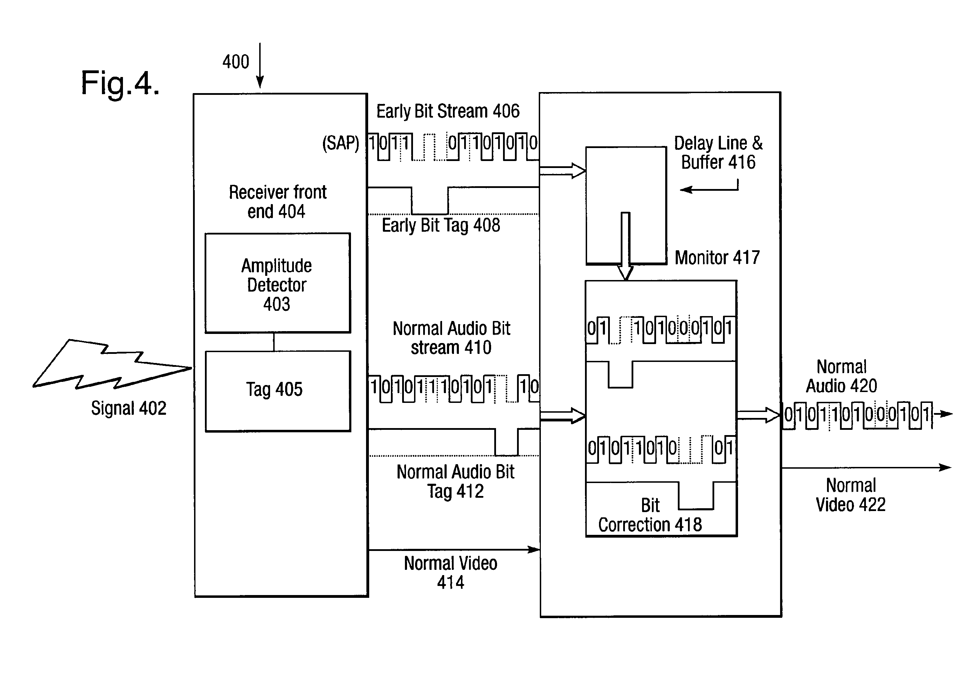

An exemplary form of the present invention is shown in Figure 4. Receiver 400 has front end 404 adapted to receive signal 402. Early (or first) audio bit stream 406 is received by receiver front end 404 which has circuitry adapted to tag 405 a received audio track bit stream a variable length binary (high/low) tag 408 indicating the segments of the audio bit stream whose signal amplitude has been determined by amplitude detector 407 to be either above or below the threshold level. The normal (or second) audio bit stream 410 is received and also tagged with normal audio bit tag 412 its signal amplitude. Normal video 414 may also be received. Delay line and buffer 416 store early audio bit stream 406. The signal levels of the two audio tracks are continuously monitored and the associated tags are compared to one another by processor 418. Processor 418 has bit correction circuitry that digitally stitches into the presentation the early audio bit stream whenever the normal audio bit stream 410 has a low audio bit tag 412 and the audio bit tag 408 of early audio bit stream 406 is high. Whenever the bit tag 412 is high, the normal audio bit stream 410 is output and Audio 420 and Video 422 are then presented to the system user. If both bit tags 408 and 412 are low then the normal audio 420 is muted until either or both of the bit tags go high.

Such audio presentation to the user may be accomplished by a conventional analog radio, for example by having processor 418 include a converter to provide an analog signal. Alternatively, the presentation may be accomplished by a conventional digital radio, for example by having processor 418 include a converter to provide a compatible digital radio signal. As a further alternative, the user presentation may be accomplished, for example, by having processor 418 include a converter to provide a digitally coded signal adapted for presentation by a computer with a monitor, speakers, and appropriate media playing applications programs such as the Real Player by Real Networks or Windows Media Player by Microsoft Corporation or alternatively by a digital media player such as the Zen Portable Media Center by Creative Technology Ltd of Singapore or the Lyra Audio/Video Jukebox by RCA.

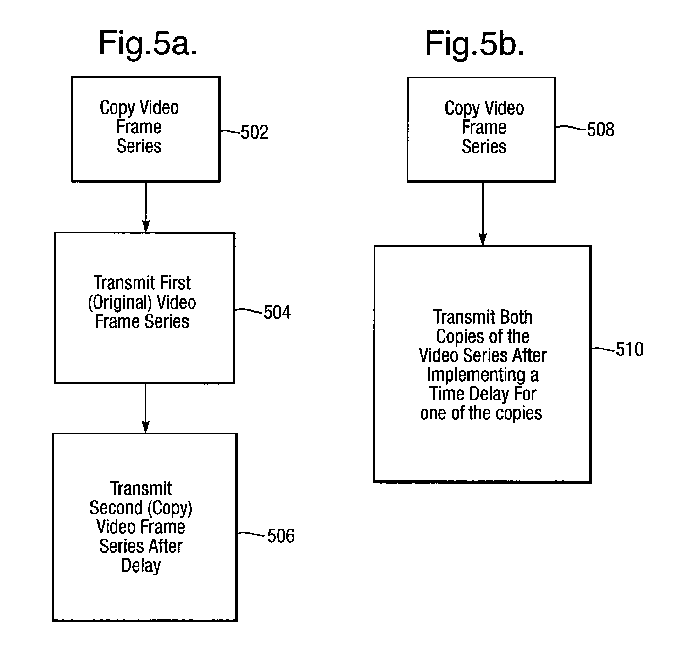

The transmission of the dual video channels may be embodied in flow chart diagrams as shown in Figures 5a and 5b. In one embodiment depicted in Figure 5a, a copy is made of the original video frame series (step 502). The first (original) video frame series is transmitted (step 504). The second video frame series (copy of first video frame series) is then transmitted several seconds later (step 506). The receiver presents the video frame series transmitted in step 506 in real time, but in the event of a signal blockage then portions of the signal transmitted in step 504 that were saved in the receiver are stitched into the presentation to maintain the continuity of the user presentation until the signal blockage event ceases.

In another embodiment depicted in Figure 5b, two copies of the original video frame series are made (step 508), one is delayed relative to the first by a predetermined interval, and then the two video frame series (delayed and non delayed) are transmitted simultaneously (step 510). The embodiment of Figure 5b allows for the presentation of the first transmitted video frame series after a delay of the predetermined interval, so that in the event of signal blockage the accumulated delayed video frame series is available to stitch in the user presentation. Thus, either copy may be presented to the user, and the other buffered copy used for stitching in case of transmission interruption.

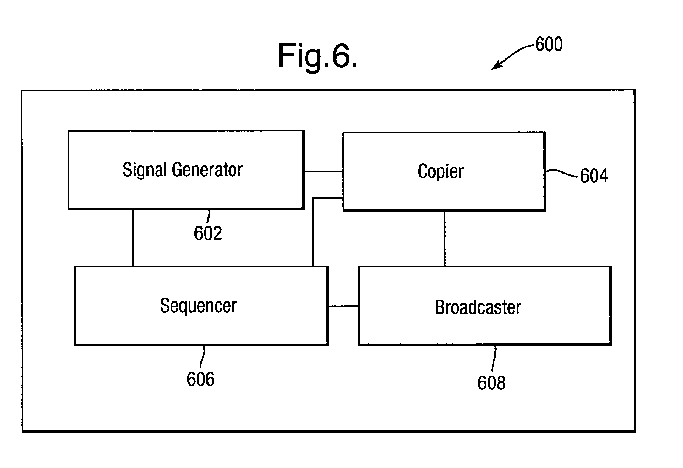

Another exemplary form of the present invention is shown in Figure 6. In the depicted embodiment, transmitter 600 has copier circuitry 604 coupled to signal generator 602. Sequencer 606 coordinates the transmission of the desired signal by broadcast circuitry 608. Copier 604 creates a copy of the first video frame series. In one embodiment, sequencer 606 provides a signal from signal generator 602 to broadcast circuitry 608 to transmit the first (original) video frame series and several seconds later sequencer 606 provides a signal from copier 604 to have broadcast circuitry 608 transmit the second (copy) video track.

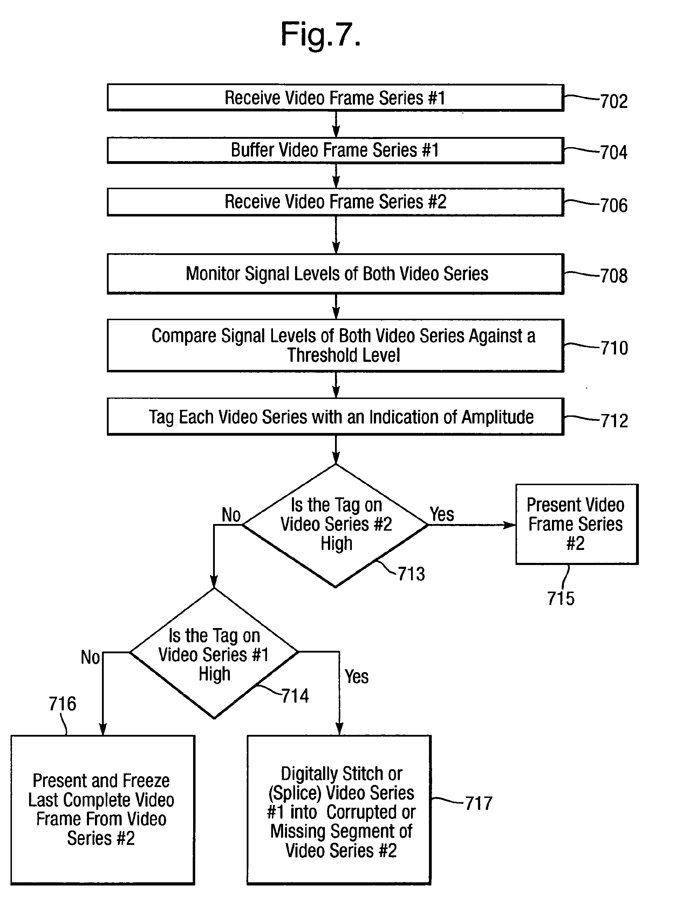

In still another embodiment of the present invention, a technique for receiving two series of video frames and stitching in the second video frame series in the event the first video frame series becomes corrupted is depicted in Figure 7. The first video frame series is received (step 702) and stored in a buffer (step 704). The second video frame series is also received (step 706). The signal levels of the two series are continuously monitored (step 708) and compared to a threshold level (step 710). The two video frame series are tagged with a high or low bit state indicative of their respective signal amplitude relative to the threshold level (step 712). If the tag of the second series is low, then the tag of the first series is checked. If the first series tag is high, then the first (buffered) series is digitally stitched into the presentation (step 714). If it is low, then the output video presentation is frozen with the last complete video frame from video series #2. However, in step 713, if the tag of series #2 is high, then the second video series is presented (step 316) to the system user. This process may be repeated and applied for predetermined numbers of frames, or a predetermined amount of time.

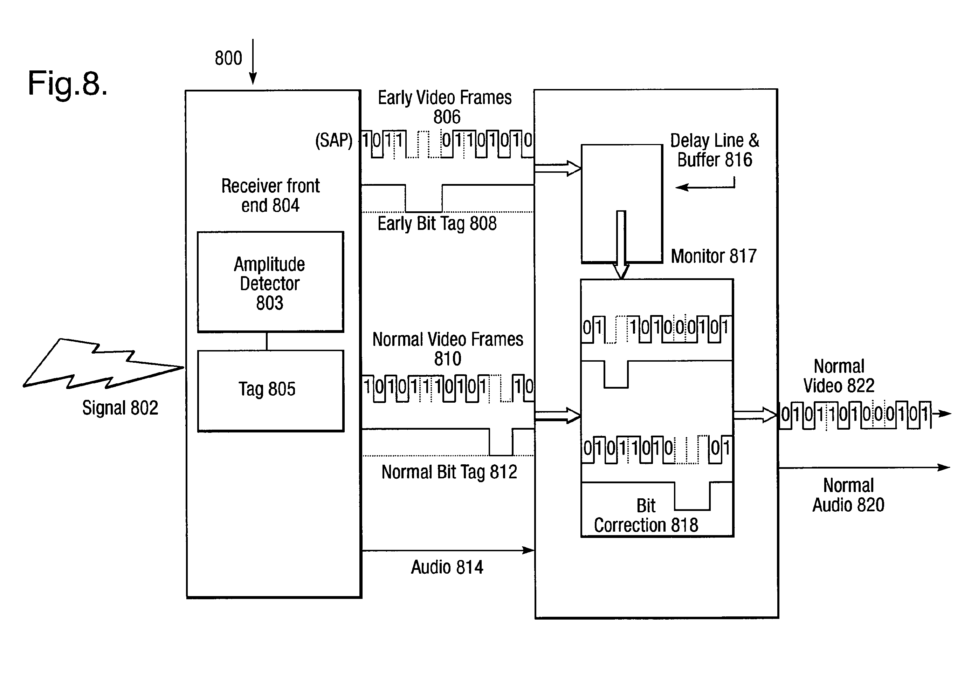

An exemplary form of the present invention is shown in Figure 8. Receiver 800 has front end 804 that is adapted to receive signal 802. Early (or first) video frame series 806 is received by receiver front end 804 which has circuitry adapted to tag 805 a received video frame or frames with early video bit tag 808 indicating signal amplitude determined by amplitude detector 807. Normal (or second) video frame series 810 is received and tagged with normal video bit tag 812 indicating its signal amplitude (while video bit tags 808 and 812 are implemented as single bits in the exemplary embodiment, such tags may alternatively implemented as a multiple bit number representing simply amplitude or a more complex expression of signal quality). Normal audio 814 may also be received. Delay line and buffer 816 store early video frame series 806. The signal levels (via their tags) of the two series are continuously monitored and compared to one another by processor 818. Processor 818 has bit correction circuitry that digitally stitches into the presentation the early video frame series when the normal video frame series 810 has lower video bit tag 812 than video bit tag 808 of early video frame series 806, otherwise using normal bit stream 810. Audio 820 and Video 822 are then presented to the system user.

Such video presentation to the user may be accomplished by a conventional analog television, for example by having processor 818 include a converter to provide an analog signal. Alternatively, the presentation may be accomplished by a conventional digital television, for example by having processor 818 include a converter to provide a compatible digital television signal. As a further alternative, the user presentation may be accomplished, for example, by having processor 818 include a converter to provide a digitally coded signal adapted for presentation by a computer with a monitor, speakers, and appropriate media playing applications programs such as the Real Player by Real Networks or Windows Media Player by Microsoft Corporation or alternatively by a digital media player such as the Zen Portable Media Center by Creative Technology Ltd of Singapore or the Lyra Audio/Video Jukebox by RCA.

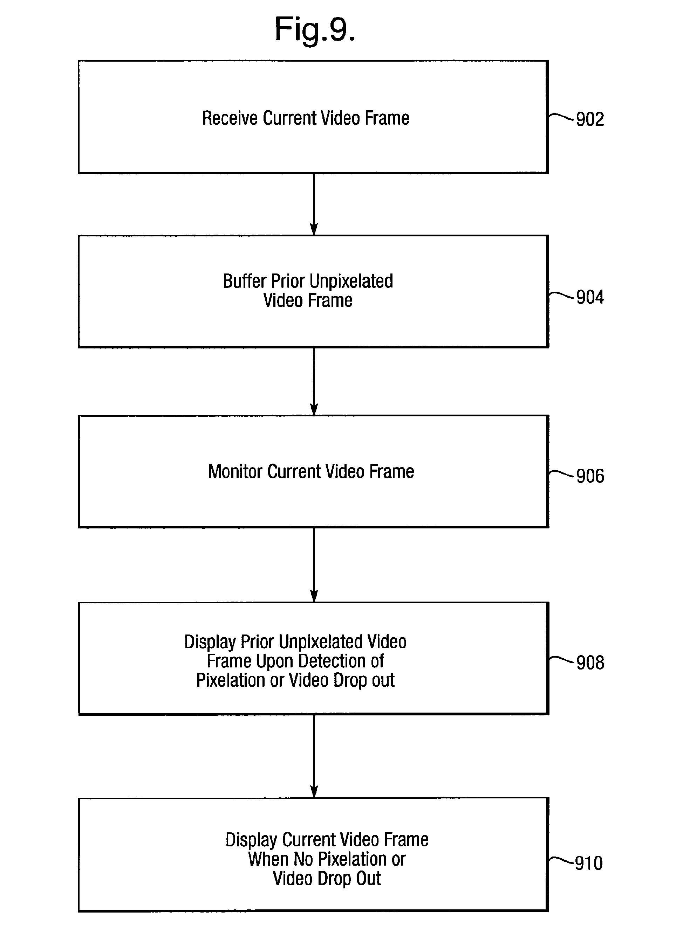

Unlike the audio track, the video presentation of a DBS system may initially require too much bandwidth to permit any form of replication or splicing. However, the time variant pixelation, freeze frames, and video dropouts are unacceptable to the system user. In another embodiment of the present invention, a technique for displaying the video component during a signal blockage is depicted in Figure 9. The DBS receiver receives the video frames (step 902). The latest, prior unpixelated video frame is stored in a buffer (step 904). The current video frames are monitored for pixelation or video drop out as they are received (step 906). If an interruption occurs in the video stream, the prior unpixelated video frame is displayed (step 908). The video frames are continually monitored and normal presentation is restored when there is no evidence of pixelation or video drop out in the current video frame (step 910).

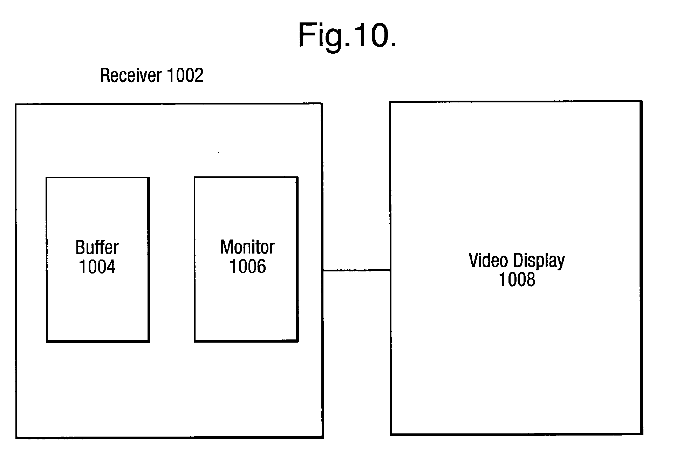

An exemplary form of the present invention is shown in Figure 10. Receiver 1002 receives the video stream as frames. The latest, prior unpixelated video frame is stored in Buffer 1004. Monitor 1006 monitors the video frames as they are received to determine if pixelation or a video dropout situation exists. If an interruption occurs in the video stream, the prior unpixelated video frame is taken from Buffer 1004 and transmitted to Video Display 1008. The video frames are continually monitored and the current video frame is transmitted to Video Display 1008 when there is no evidence of pixelation or video drop out in the current video frame.

## Claims

1. A method for transmitting media data in a digital transmission system, comprising the steps of:
a. creating a media track (102, 108);
b. transmitting a first copy of the media track (104, 110); and
c. transmitting a time-delayed second copy of the media track (106, 112).

2. The method of claim 1 wherein the first copy includes an audio component and the second copy includes an audio and a video component.

3. The method of claim 1 wherein the first and second copies include both an audio and a video component.

4. The method of claim 3 wherein the step of transmitting a time-delayed copy of the media track includes a different time delay for the audio and video components.

5. An apparatus for transmitting media data in a digital transmission system, said apparatus comprising:
a. a signal generator (202) adapted to create a media track;
b. sequencer (206) coupled to said signal generator, said sequencer adapted to provide first and second copies of the media track; and
c. transmitter (208) coupled to said sequencer, said transmitter adapted to transmit the first copy of the media track and a time-delayed second copy of the media track.

6. The apparatus of claim 5 wherein said sequencer is adapted to include an audio component in the first copy and includes an audio and a video component in the second copy.

7. The apparatus of claim 5 wherein said sequencer is adapted to include both an audio and a video component in the first and second copies.

8. The apparatus of claim 7 wherein said sequencer is capable of providing a time-delayed copy of the media track having a different time delay for the audio and video components.

9. A method for receiving media data in a digital transmission system, comprising the steps of:
a. receiving a first media track (302, 702);
b. buffering the first media track (304, 704);
c. receiving a time-delayed second media track (306, 706); and
d. presenting one of the first and second media tracks based on the reception of the tracks (313-317, 708-717).

10. The method of claim 9 wherein the first copy includes an audio component and the second copy includes audio and video components.

11. The method of claim 9 wherein the first and second copies include both audio and video components.

12. The method of claim 9 wherein the step of receiving a time-delayed copy of the media track includes a different time delay for the audio and video components.

13. The method of claim 9 wherein a second audio program (SAP) is utilized for buffering the audio component of the first media track.

14. The method of claim 9 further comprising the steps of:
a. monitoring for interruption in second media track during presentation; and
b. compensating second media track using the first buffered media track when interruption is detected in the second media track.

15. The method of claim 9 further comprising the steps of:
a. determining the reception quality of the second media track; and
b. digitally stitching the first media track into the presentating step when the reception quality of the second media track is not adequate.

16. The method of claim 9 further comprising the steps of:
a. tagging the first media track with an indication of signal amplitude;
b. tagging the second media track with an indication of signal amplitude;
c. monitoring the signal level of the first media track during the presentating step;
d. monitoring the signal level of the second media track during presentating step;
e. comparing the signal levels of first and second media tracks during the presentating step; and
f. digitally stitching the first media track into the presentating step when the second media track has a reduced or absent signal level as compared to the first media track.

17. The method of claim 9 for presenting video media data, comprising the steps of:
a. buffering a video media track;
b. monitoring a current media track for pixelation or video drop out;
c. displaying the buffered video media track upon detection of pixelation or video drop out; and
d. restoring the current media track for the video presentating step when no pixelation or video drop out is present of the current media track.

18. An apparatus for receiving data in a digital transmission system, said apparatus comprising:
a. a receiver (404, 804) adapted to receive a first media track;
b. circuitry ((416, 816) coupled to the receiver, the circuitry adapted to buffer the first media track;
c. the receiver adapted to receive a time-delayed second media track; and
d. circuitry (417, 817) coupled to the receiver, the circuitry adapted to present one of the first and second media tracks based on the reception of the tracks.

19. The apparatus of claim 18 wherein said receiver is adapted to decode the first media track including an audio component and the second media track including an audio and a video component.

20. The apparatus of claim 18 wherein said receiver is adapted to decode the first and second media tracks including both an audio and a video component.

21. The apparatus of claim 18 wherein said circuitry is capable of receiving a time-delayed copy of the media track including a different time delay for the audio and video components.

22. The apparatus of claim 18 wherein said receiver is adapted to decode a second audio program (SAP) for buffering an audio component of the first media track.

23. The apparatus of claim 18 further comprising:
a. circuitry (417) coupled to the receiver, the circuitry adapted to monitor for interruption in the second media track during presentation; and
b. circuitry (418) coupled to the receiver, the circuitry adapted to compensate the second media track using the first media track when interruption is detected in the second media track.

24. The apparatus of claim 18 further comprising:
a. a comparator (817) adapted to compare the quality of the first media track and the second media track; and
b. circuitry (818) coupled to the receiver, the circuitry adapted to digitally stitch the first media track into presentation when the second media track has a better quality than the first media track.

25. The apparatus of claim 18 further comprising:
a. circuitry (805) coupled to the receiver, the circuitry adapted to tag the first media track with an indication of signal amplitude;
b. circuitry coupled to the receiver, the circuitry adapted to tag the second media track with an indication of signal amplitude;
c. a monitor adapted to monitor the signal level of the first media track during presentation;
d. the monitor adapted to monitor the signal level of the second media track during presentation;
e. a comparator adapted to compare the signal level of the first and second media tracks during presentation; and
f. circuitry coupled to the receiver, the circuitry adapted to digitally stitch the first media track into presentation when the second media track has a reduced or absent signal level as compared to the first media track.

26. The apparatus of claim 18 for presenting video media data in a digital transmission system, wherein:
a. the receiver includes a buffer adapted to store prior video media data;
b. the circuitry includes monitor circuitry adapted to monitor the current video media data for pixelation or video drop out;
c. the circuitry includes display circuitry adapted to display prior unpixelated video media data upon detection of pixelation or video drop out; and
d. the receiver further includes circuitry adapted to restore normal video presentation when no pixelation or video drop out is present of the current video media data.
